(19) Europäisches Patentamt
European Patent Office
Office européen des brevets

(11) Publication number: **0 242 278**
**A2**

(12) **EUROPEAN PATENT APPLICATION**

(21) Application number: **87400794.1**

(22) Date of filing: **08.04.87**

(51) Int. Cl.[4]: **C 09 K 19/38**
C 09 K 19/56

(30) Priority: **11.04.86 US 850951 17.03.87 US 27482**

(43) Date of publication of application:
**21.10.87 Bulletin 87/43**

(84) Designated Contracting States: **DE FR GB IT NL**

(71) Applicant: **THE BOARD OF TRUSTEES OF THE UNIVERSITY OF ILLINOIS**
**349 Administration Building University of illinois 506 South Wright Street**
**Urbana Illinois 61801 (US)**

(72) Inventor: **Stupp, Samuel I.**
**2014 Bruce Drive**
**Urbana Illinois 61801 (US)**

**Moore, Jeffrey S.**
**352 Paddock Drive**
**Savoy Illinois 61874 (US)**

(74) Representative: **Bonnetat, Christian et al**
**Cabinet PROPI Conseils 23 rue de Léningrad**
**F-75008 Paris (FR)**

(54) **Polymers having enhanced electrical and magnetic properties.**

(57) Liquid crystal polyerms are associated with units which are active an an electric or magnetic field to produce a polymeric product having enhanced physical magnetic or electric properties. The electrically or magnetically active unit used in the invention can be associated with the liquid crystal polymer by reaction with the liquid crystal polymer to form a copolymer, or by being dissolved or otherwise intimately mixed in the liquid crystal polymer. Suitable magnetically active units include metal complexes based on bis(salicylidene)ethylenediimine.

EP 0 242 278 A2

**Description**

"POLYMERS HAVING ENHANCED ELECTRICAL AND MAGNETIC PROPERTIES"

BACKGROUND

This is a continuation-in-part of our copending U.S. patent application Serial No. 850,951, filed April 11, 1986.

This invention relates to novel synthetic polymeric materials which are responsive to external electric or magnetic fields, and also to a method for enhancing in a liquid crystal polymer, the ability to react to external magnetic or electric fields as a means for altering the physical, magnetic or electrical properties of the polymer.

BACKGROUND AND SUMMARY OF THE INVENTION

It is known that certain substances, known as liquid crystals, have the ability at certain temperatures to flow in the manner of a liquid while maintaining an ordered structure characteristic of a crystal. While in the liquid crystal state, the molecules of such materials will respond to external electric or magnetic fields and will align in ordered arrangements. While most known liquid crystal materials are relatively low in molecular weight, some polymers are also known to form liquid crystals.

In accordance with the invention, liquid crystal polymers (LCP) are associated with materials which are active in an electric or magnetic field to produce a polymeric product having properties which can be modified in certain desirable ways, in accordance with the nature of the active material which is associated therewith, and the conditions, e.g., the presence of an electric or a magnetic field which exists when the liquid crystal polymer is frozen to form a solid object, such as a rod or a film. Among the desirable results which can be achieved in accordance with the invention is a decrease in the anisotropy of an extruded solidified liquid crystal polymer, to make the resulting product more nearly isotropic with respect to its properties, such as the coefficient of thermal expansion, or mechanical strength. In addition, the invention permits the production of polymers having increased electrical conductivity in certain directions, e.g., parallal to the molecular axis in an oriented material.

The electrically or magnetically active unit used in the invention can be associated with the liquid crystal polymer by reaction with the liquid crystal polymer to form a copolymer, i.e., one in which the active unit enters the backbone chain of the polymer. Copolymerization can be achieved by providing at the ends of the liquid crystal polymer molecules and of the magnetically or electrically active units, functional groups such as acetoxy, carboxyl, phenolic, amino or ester groups, which react to form a copolymer including the magnetically or electrically active units. In addition, the electrically or magnetically active units can be associated with the liquid crystal polymer by being dissolved in the liquid crystal polymer.

A magnetically active unit (MAU) that is suitable for incorporation in a liquid crystal polymer in accordance with the invention desirably possesses certain properties. It should be paramagnetic or diamagnetic so that it will be affected by a magnetic field to produce a desired result in the liquid crystal polymer with which it is associated. Secondly, in order to be introduced into the liquid crystal polymer structure, the magnetically active unit must be chemically and thermally stable. Thirdly, in order to enhance the coupling effect between the unit and the surrounding polymer chains, the magnetically active unit should desirably possess axial symmetry and a large aspect ratio.

In accordance with the invention, there are provided certain electrically and magnetically active units which can be used to alter the properties of a liquid crystal polymer with which they are associated.

DESCRIPTION OF THE DRAWINGS

The invention will be better understood from the following description thereof, taken in conjunction with the accompanying drawings, in which:

Figure 1 is a plot illustrating the rate at which the molecules of two liquid crystal polymers are aligned by a magnetic field, one polymer including an MAU;

Figure 2 is a plot of the electrical conductivity of an aligned liquid crystal polymer in comparison with a control;

Figure 3 depicts the orientation of a sample of a liquid crystal polymer relative to its molecular axis; and

Figure 4 is an NMR spectrum of a liquid crystal polymer containing a magnetically active unit.

DESCRIPTION OF THE PREFERRED EMBODIMENTS

Preparation Of A Liquid Crystal Polyester

A liquid crystal polymer suitable for use in the invention has the chemical structure

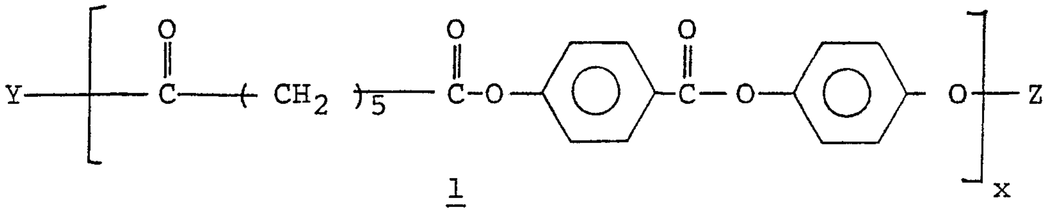

1

wherein x has a value of 15-50, and Y and Z are reactive groups capable of entering into a reaction.

A similar material was first synthesized by vonLuyen and Strzeleki (Europ. Polymer J., 6, 303, 1980). The overall process for production of the monomer is depicted in the following equations and description.

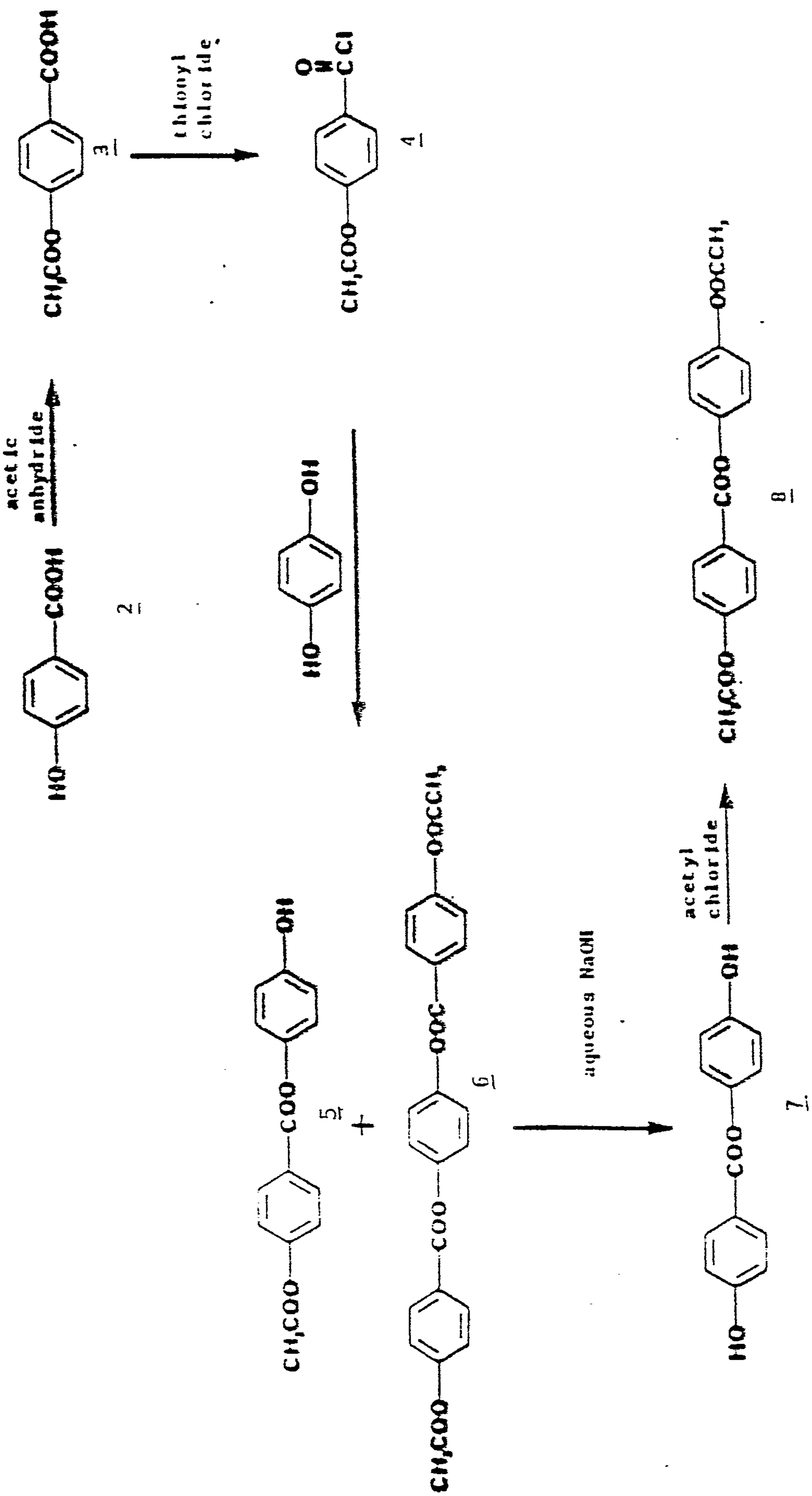

thionyl chloride
acetic anhydride
aqueous NaOH
acetyl chloride


2 3 4 5 + 6 7 8

p-Acetoxybenzoic acid (3)

Interfacial synthesis of 3 was achieved by combining 69.1 g (0.5 mole) of p-hydroxybenzoic acid with 200 ml of 6.25N NaOH and 375 g of ice in a high speed reaction blender. 85 ml (0.9 mole) of acetic anhydride was added in one portion to the rapidly stirred mixture. After 10 minutes, 200 ml of 6.25N HCl was added and the solid product collected by suction filtration using a sintered glass funnel. The precipitate was washed thoroughly with water and dried over night in vacuo at 80°C to yield 84 g (92%) of essentially pure 3. $^1$H NMR ($d_6$-DMSO) δ8.03 (d,2 J=8.6HZ); δ7.26 (d,2 J=8.6HZ); δ2.31 (s,3).

4′-hydroxyphenyl-4-hydroxybenzoate (7)

83 g (0.46 moles) of thoroughly dried p-acetoxybenzoic acid was placed in a dry 1000 ml single neck round bottom flask fitted with a reflux condensor and drying tube. After adding 380 ml of thionyl chloride and three drops of dimethylformamide (catalyst), the solution was refluxed 1-1/2 hours. At the end of this time excess thionyl chloride was removed under vacuum leaving a clear oil which gave crystals of p-acetoxybenzoyl chloride (4) upon cooling to 0°C. This material was used directly without further purification.

In a dry 3 l, 3-neck round bottom flask fitted with a mechanical stirrer, 500 ml addition funnel, and nitrogen inlet was added 110 g (1 mole) of hydroquinone. The system was purged with a stream of dry nitrogen and 750 ml of dichloroethane and 190 ml of pyridine were added. The addition funnel was charged with a solution of 4 (prepared as above) in 250 ml of dichloroethane. This was added dropwise with rapid stirring to the solution of hydroquinone over a period of 2-1/2 hours. After the addition was complete, the reaction mixture was divided into 150 ml portions and to each was added 250 ml of methylene chloride followed by extraction with 1.5N HCl (2 × 250 ml). The aqueous layers were extracted with methylene chloride (1 × 100 ml). All organic layers were combined and dried over magnesium sulfate. The solvent was removed leaving 113 g of a white solid that was found to be a mixture of 5 and 6 as verified by proton NMR and tlc (ethylacetate, benzene 15:85; $R_F$ values, 5 0.33, 6 0.56). This solid was taken up in 2.5l of 0.6N NaOH containing 3.0 g of sodium bisulfite. The contents were vigorously stirred for 10 minutes at room temperature and then filtered through a buchner funnel to remove the undissolved solid (mainly 6). The filtrate was poured onto 2 kg of ice and 130ml of concentrated HCl were slowly added with rapid stirring. The solid was collected by suction filtration, giving 44.2 g of essentially pure 7 after drying 12 hours in vacuo at 80°C. The overall yield starting from 3 was 41.5%, $^1$H NMR ($d_6$-DMSO) δ10.43 (s,1); δ9.42 (s,1); δ7.95 (d,2,J-8.6HZ) δ6.96 (AB quartet, 4); δ6.80 (d,2,J-8.6HZ).

4′acetoxyphenyl-4-acetoxybenzoate (8)

44 g 7 (0.19 mole) and 350 ml of 2:1 (v:v) dichloroethane pyridine mixture were placed in a dry, 3-neck, round bottom flask fitted with a mechanical stirrer, $N_2$ inlet, and addition funnel. The addition funnel was charged with 40.7 ml (0.56 mole) acetyl chloride which was added dropwise to the solution of 7 at 0°C over a period of 1 hour. After the addition was complete the contents were stirred an additional 30 minutes at room temperature. The reaction contents were divided into 100 ml portions to each of which were added 100 ml of methylene chloride followed by extraction with 1N HCl (2 × 200 ml), 0.1N cold NaOH (1 × 100 ml), and water (1 × 150 ml). All aqueous layers were combined and after drying over $MgSO_4$ the solvent was removed leaving a tan colored solid. Purification was achieved by flash chromatography (silica gel; methylene chloride diethyl ether 97:3). The final product 8 was obtained in 74% yield after a single re-crystallization from ethyl acetate. $^1$H NMR ($CDCl_3$) δ8.22 (d,2,j=8.9HZ); δ7.17 (m.6); δ2.34 (s,3); δ2.31 (s,3).

Anal. Calculated for $C_{17}H_{14}O_6$: C,64.96; H,4.49.
Found: C,65.18; H,4.52

Synthesis of a Liquid Crystal Polyester (I)

A mixture of 4.71 g of 4′-acetoxyphenyl-4-acetoxybenzoate 8, 3.00g of pimelic (heptanedioic) acid (25% mole excess), 4.0 mg of antimony trioxide, and 4.5 mg of lead acetate were combined in a 100 ml round bottomed flask. The flask was immersed in a sand bath preheated to 180°C. A slow stream of dry nitrogen was bubbled through the clear melt as the temperature was raised to 280°C over a 2 hour period. After heating 1 hour further at this temperature, the reaction flask was cooled and the product was purified by solution precipitation, in which the intermediate product was dissolved in 35 ml of tetrachloroethane, followed by precipitation into a 10 volume excess of diethylether. After drying, the intermediate product was transferred into a 3-inch diameter sublimation apparatus along with an additional 3.0 mg of antimony trioxide. The apparatus was immersed in the sand bath at 180°C and a high vacuum was applied. The temperature of the bath was raised quickly to 285°C and remained at this temperature for 3 hours. The product was dissolved in 70 ml of hot tetrachloroethane, cooled, filtered, and precipitated into 500 ml of diethylether. The 10-white solid was collected by suction filtration on hardened filter paper and dried 18 hours in vacuo at 100°C.

An alternative route for the synthesis of a suitable liquid crystal polyester similar to that described above, involves the reaction of three monomers, i.e., p-acetoxybenzoic acid, diacetoxy hydroquinone, and pimelic acid instead of the monomers 4′-acetoxyphenyl-4-acetoxybenzoate and pimelic acid, which are reacted in a manner similar to that described above for the synthesis of LCP I. The modified liquid crystal polymer can be depicted as having the following composition and structure:

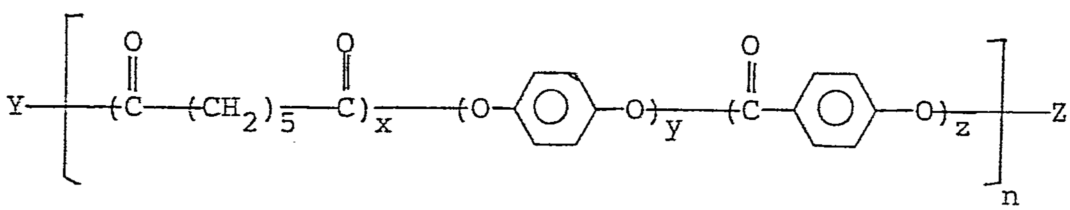

Ia

wherein x, y, and z are the relative fractions of each monomer, i.e., x + y + z = l, y + z ≧ 0.66, n has a value of 50-200, and Y and Z are reactive groups capable of entering into a reaction.

An advantage of the process involving the reaction of the three monomers is that higher molecular weight products can be produced, compared with the process involving the reaction of 4′-acetoxyphenyl-4-acetoxybenzoate and pimelic acid. Another advantage is that by varying the relative amounts of the three monomers a family of polymers can be produced in which the melting point can be increased, if desired, by increasing the relative number of aromatic structural units.

An additional liquid crystal polymer which can be used in the invention is a constitutional isomer of the previously described product I. The constitutional isomer differs from product I in containing a regular sequence of the three structural units which form the polymer, i.e., pimeloate

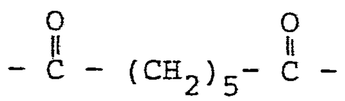

(C),

dioxyphenyl

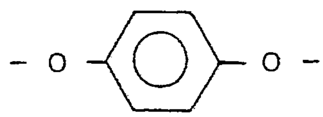

(A) ,

and oxybenzoate

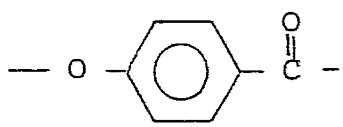

(B).

Whereas in product I, the order of these units is random, in the constitutional isomer the sequence is fixed and regular, e.g.,

- $(ABCBAC)_n$-

The constitutional isomer can be prepared in accordance with the following reaction:

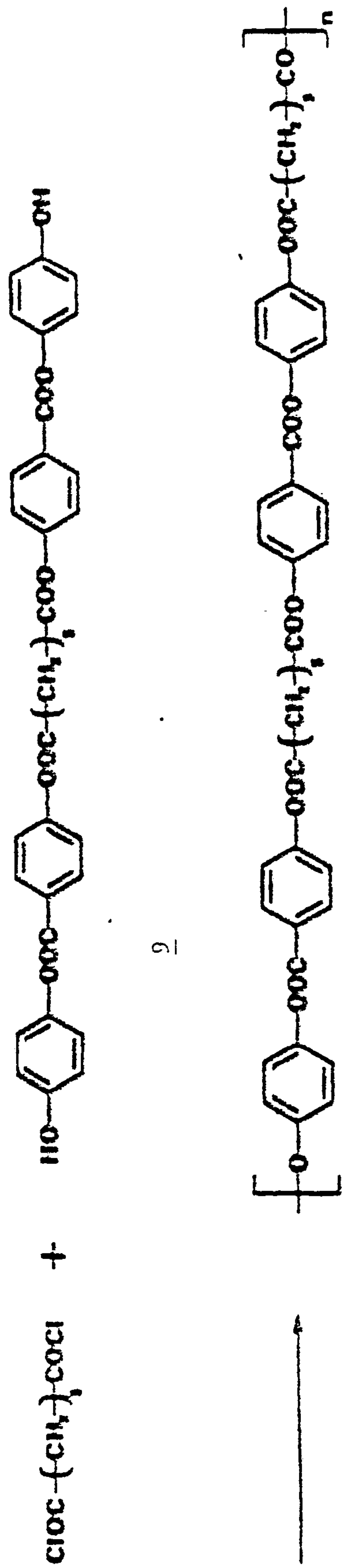

9

10

An example of the preparation of the constitutional isomer is set out below.

Preparation of a Chemically Ordered Isomer of a Liquid Crystal Polyester

The organic solvents used in synthetic work were dried and stored over molecular sieves (Linde 4A l/l6 in pellets). Pyridine was stirred for 24 hours with cerium (IV) sulfate and potassium carbonate, filtered, distilled and stored over sieves prior to use. Thin layer chromatography (tlc) data were obtained using Merk silica gel 60 $F_{254}$ precoated plates. $^1H$ NMR spectra of intermediates in the monomer synthesis were recorded at 300 MHz on a General Electric QE-300 NMR in $CDCl_3$ or $d_6$-$Me_2SO$ and referenced to an internal $SiMe_4$ standard.

Bis (4-formylphenyl) pimeloate

In a dry 3-neck, 200ml round bottom flask fitted with a drying tube and additional funnel was placed l6.4g (0.l35 mole) p-hydroxybenzaldehyde in l30ml of dichloroethane containing 750mg dimethylaminopyridine and l0.9ml of pyridine. The addition funnel was charged with l0.04ml (l2.lg,0.062mole) pimeloyl chloride in l0ml dichloroethane. After cooling to 0°C the pimeloyl chloride solution was added dropwise to the magnetically stirred solution of p-hydroxybenzaldehyde. Stirring was continued for 30 min at 0°C after the addition was complete and the contents were then extracted with 0.l N HCl (2 x l50) and 0.lN NaOH (l x l50). Organic layers were dried over $MgSO_4$ and solvent evaporation left 22.0g (96%) of crude dialdehyde. Purification was achieved by flash chromatography using silica gel eluted with methylene chloride and ethyl acetate (96:4). $^1H$ NMR ($CDCl_3$) δl0.00(s,2H), 7.92(d,4H,J=6.8Hz), 7.28(d,4H,J=8.lHz), 2.65(t,4H,J=7.3Hz), l.85(m,4H), l.57(m,2H).

Bis(4-carboxyphenyl)pimeloate

33.2g (9l.87 mmole) tetrabutylammonium permanganate was dissolved in 500ml of pyridine and stirred under nitrogen l.5 h prior to use. To a separate 3-neck, 2 l round bottom flask fitted with mechanical stirrer, nitrogen inlet, and additional funnel were added l7g dialdehyde (46.l5 mmole) in 250ml pyridine. The addition funnel was charged with the permanganate solution which was added dropwise at room temperature over a period of 90 min. After stirring an additional 45 min the contents were poured into 3.0 l of water containing 920 ml concentrated HCl, l kg ice, and l90 g sodium bisulfite. The solid product obtained after overnight refrigeration of the solution was recovered by vacuum filtration and washed with cold methanol. After air drying, the white powder was dried overnight in vacuo at 80°C yielding l6.6 g (90%) of diacid. $^1H$ NMR ($d_6$-$Me_2SO$) 8.06(d,4H,J=8.6Hz), 7.l5(d,4H,J=8.6Hz), 2.64(t,4H,J=7.3Hz), l.83(m,4H), l.56(m,2H).

Bis(4'-carbobenzoxyphenyl-4-benzoyloxy) pimeloate

l6.0 (39.96 mmole) of dry diacid and 40 ml of thionyl chloride were placed in a dry 200 ml single-neck round bottom flask. After the addition of one drop of DMF contents were refluxed l h. Excess thionyl chloride was removed under vacuum leaving a brown oil which solidified upon cooling to 0°C and was sufficiently pure to be used in the next step. To a 500 ml 3-neck flask fitted with an addition funnel and nitrogen inlet was added 24.4 g (l00.0 mmole) monocarbobenzoxyhydroquinone, 0.7 g (5.7 mmole) dimethylaminopyridine, 8.l ml pyridine (l00.l mmole) and 225 ml dichloroethane. The solution was cooled to 0°C and the addition funnel was charged with the diacid chloride prepared above in 32 ml dichloroethane and added dropwise. After the addition was complete, contents were stirred 30 min at 0°C and then diluted with 800 ml methylene chloride. Extraction with 0.5N HCl (2 x 400) and drying over $MgSo_4$ left 35.8 g (l00%) the desired crude product after solvent removal. The crude product was recrystallized from benzene4heptane. $^1H$ NMR ($CDCl_3$) δ8.22 (d,4H,J=9.7Hz), 7.32 (m,22H), 5.28 (s,4H), 2.66 (t,4H,J=7.3Hz), l.86 (m,4H), l.6l (m,2H).

Bis(4'-hydroxyphenyl-4-benzoyloxy) pimeloate (9)

To a 3-neck, 2 l flask fitted with nitrogen inlet and reflux condensor was added under a nitrogen blanket 9.7 g of 5% Pd-C catalyst followed by a solution of 20.0 g (23.45 mmole) of bis (4'-carbobenzoxyphenyl-4-benzoyloxy) pimeloate in 425 ml THF. To this suspension was added 600 ml of a 3:l methanol/cyclohexene solution. After refluxing for 40 min contents were filtered to remove catalyst, and solvent evaporation left l3.4 g (98%) of desired crude product. A single recrystallization from ethanol/water left analytically pure bisphenol. $^1H$ NMR ($d_6$-$Me_2SO$) δ9.50 (s,2H), 8.l6 (d,4H,J=8.6), 7.35 (d,4H,J=8.6), 7.06 (d,4H,J=8.8), 6.80 (d,4H,J=8.8), 2.68 (t,4H,J=7.2), l.73 (m,4H), l.50 (m,2H).

Anal. Calculated for $C_{33}H_{28}O_{10}$ C,67,69; H,4.83.

Found: C,67.6l; H,4.83.

Ordered Polyester (l0)

Pimeloyl chloride (Aldrich) was fractionally distilled under reduced pressure (bp 94-96°C, 0.4 mm). Tetrachloroethane was fractionally distilled from $K_2CO_3$ and stored over molecular sieves 24 h prior to use. The bisphenol 9 was dried at ll0°C in vacuo for l2 h just before polymerization. Glassware was dried overnight at l20°C, assembled hot, and cooled under dry nitrogen. Into a l00 ml, single-neck flask was weighed 580.4 mg (2.945 mmole) of pimeloyl chloride. The flask was fitted with a Claisen adapter connected to a reflux condensor with drying tube and a nitrogen inlet which reached the flask bottom. 28 ml tetrachloroethane was added to the flask along with an open weighing vial containing l.72l6 g (2.945 mmole) of the bisphenol. The flask was immersed in an oil bath preheated to l30°C and nitrogen was bubbled through the solution for 5 h. After cooling and diluting with 20 ml tetrachloroethane, the product was recovered by filtering the solution into 500 ml of ether. The solid was collected by vacuum filtration and dried l8 h in vacuo at l00°C yielding l.28 g (6l%) of

the polyester.

The use of the chemically ordered liquid crystal polymer in the invention is beneficial in that it enhances alignment capability on particular surfaces, in contrast with liquid crystal polymers in which the structural units have a random orientation. For example, we have found that monodomains of the ordered polymer can be formed in contact with a grooved glass surface in periods on the order of the hour. In contrast, the random polymer does not easily form monodomains even after periods of contact with the surface on the order of one day. In comparison with the ordered polymer, however, the random polymer is more easily frozen to maintain a desired orientation after such orientation has been achieved.

Preparation of a Magnetically Active Unit (MAU)

A magnetically active unit useful in the invention has the following chemical structure, based on a complex of bis(salicylidene)ethylenediimine:

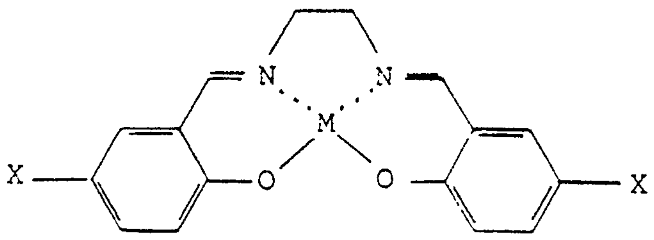

wherein M is a transition metal such as iron, nickel, copper, or cobalt, or a rare earth metal such as europium or cerium, and X is a reactive functional group capable of reaction with the backbone of a liquid crystal polymer, such as alkoxy, carboxyl, phenolic, amino, or ester. The parent compound of this family, wherein X=H, is known and exhibits good thermal stability in addition to anisotropic paramagnetism. These compounds are easily synthesized from 5-substituted salicylaldehydes in accordance with the following reactions which illustrate the production of the compound wherein M is Cu.

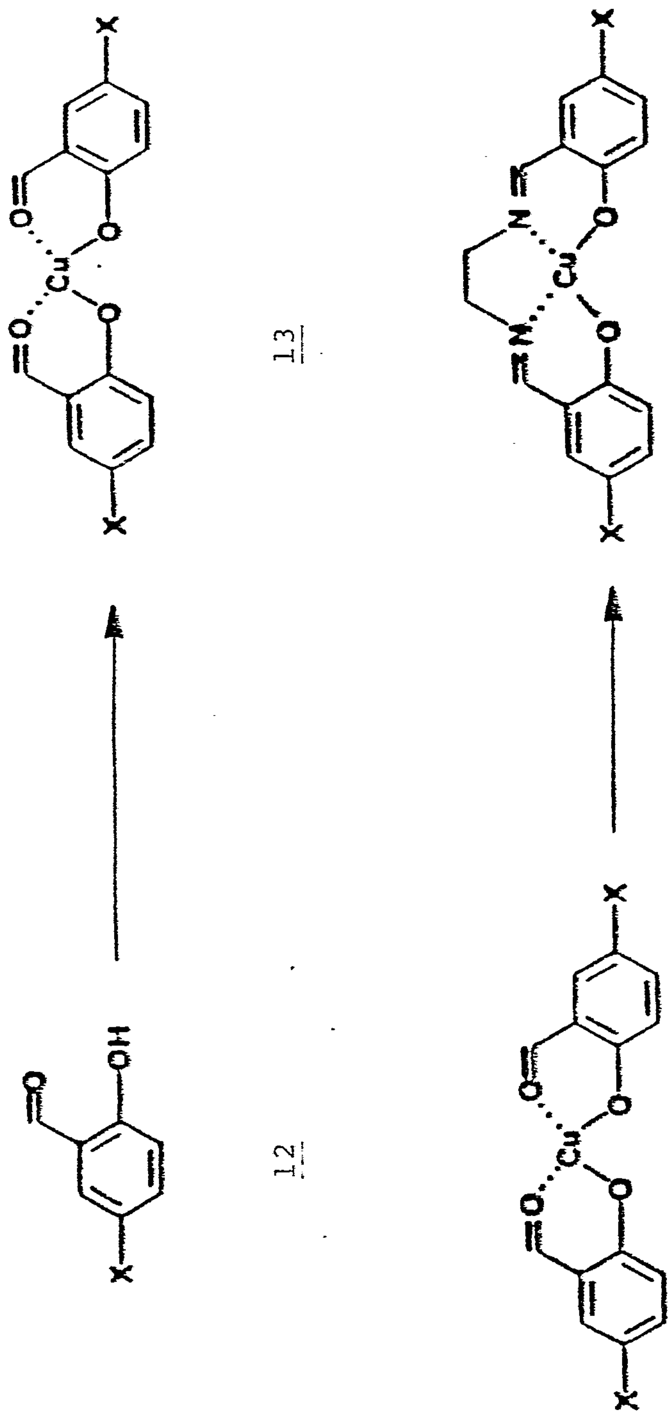

12

13

14

The preparation of a typical magnetically active unit, wherein X is -OAc, is described below.

5-Acetoxysalicylaldehyde-copper (II) (I3)

0.42 g (2.3 mmole) of 5-acetoxysalicylaldehyde I2 was dissolved in 2.5 ml of warm ethanol. 3.5 ml of a saturated cupric acetate solution was added dropwise and the contents heated to 70°C for 5 minutes. The reaction flask was cooled to room temperature. The solid was collected by suction filtration and washed well with water and wet ethanol, giving 0.42 g of the desired compound after drying. Corresponding magnetically active units can be prepared with other metals using the corresponding acid salts.

Bis(5-acetoxysalicylidene) ethylenediimine Cu (II) (I4)

0.42 g (I.0 mmole) of ethanol at 60°C. 0.I0 ml of ethylenediamine was added dropwise and the contents stirred at this temperature for I5 minutes. After cooling to room temperature, the solid was collected by suction filtration and washed with water and methanol. Mass spectrum: calcd for $^{12}C_{20}{}^{1}H_{18}{}^{63}Cu{}^{14}N_2{}^{16}O_6$ parent ion, m/3 445; found, m/e 445. Elemental Anal: calcd for $C_{20}H_{18}CuN_2O_6$: C, 53.87; H, 4.07; Cu, I4.25; N, 6.28. Found: C, 52.94; H, 4.I6; Cu, I4.38; N, 6.34.

Incorporation of Magnetically Active Units Into a Liquid Crystal Polymer

The invention contemplates compositions comprising a liquid crystal polymer having associated therewith a magnetically active unit having an absolute value of magnetic susceptibility anisotropy ($\Delta\tau$) greater than I.0 × $I0^{-7}$ emu cgs $g^{-1}$. The "absolute" value refers to the difference, regardless of sign, between the values of $\tau$ in perpendicular directions, e.g., parallel to and perpendicular to the direction of the long axis of the molecule of the MAU.

A magnetically active unit can be incorporated in a liquid crystal polymer by adding the magnetically active unit in a desired amount, suitably 5-25% by weight, to a melt of the liquid crystal polymer, e.g., formula I, as previously described. The mixture is agitated for one hour by bubbling dry nitrogen through the melt, whereupon the melt is then allowed to solidify.

The effect of incorporating a magnetically active unit in a high molecular weight liquid crystal polyester of the type previously described is illustrated in Figure I, which shows that the incorporatiom significantly increases the rate of magnetic alignment of the molecules of the liquid crystal polymer in a magnetic field. Figure I is a plot of the order parameter $<S_{z'z'}{}^{2}>$ calculated from NMR data, indicating the extent to which the molecules of the liquid crystal polymer are fully aligned, for which state the order parameter would have a value of approximately I. As shown in Figure I, the polyester containing 20% of the previously described magnetically active unit (MAU) I4 responded much more rapidly to the applied magnetic field to produce a more ordered structure, although the ultimate value of order parameter achieved (approximately 0.5) was less than that (approximately 0.7) ultimately arrived at in the case of the pure polyester.

The data depicted by Figure I indicate two uses of the invention: (I) to reduce the time required by a liquid crystal polymer to respond to an applied magnetic field, thereby reducing the processing time of products made with the liquid crystal polymer, and (2) to reduce the anisotropy of a liquid crystalline polymer which is typically created by extrusion of the polymer. The lower ultimate value of order parameter achieved by the polymer containing the MAU indicates that the addition of the MAU was effective in changing the orientation of the backbone of the liquid crystal polymer. The paramagnetic susceptibility of the MAU is largest normal to the long axis of its molecule. The pure polymer, on the other hand, has its largest diamagnetic susceptibility parallel to the backbone. Complete alignment of the pure polymer along the field direction should produce an order parameter approximately equal to one. However, if the backbone were to orient at 90° to the external field, the fully aligned material would have an order parameter of approximately 0.25. Figure I indicates that the interaction of the magnetically active unit with the magnetic field is capable of rotating to a significant extent the backbone direction of the pure polymer away from the field's axis and of so doing at a rate faster than that which is characteristic of the pure polymer aligning along the field direction. Accordingly, the anisotropy which is characteristic of a liquid crystal polymer as a result of the alignment of its backbone polymers during extrusion can be reduced by incorporating in the liquid crystal polymer a magnetically active unit which during extrusion in a magnetic field is capable of reorienting at least some of the backbone polymers to an extent which reduces the anisotropy of the liquid crystal polymer and makes the material more nearly isotropic.

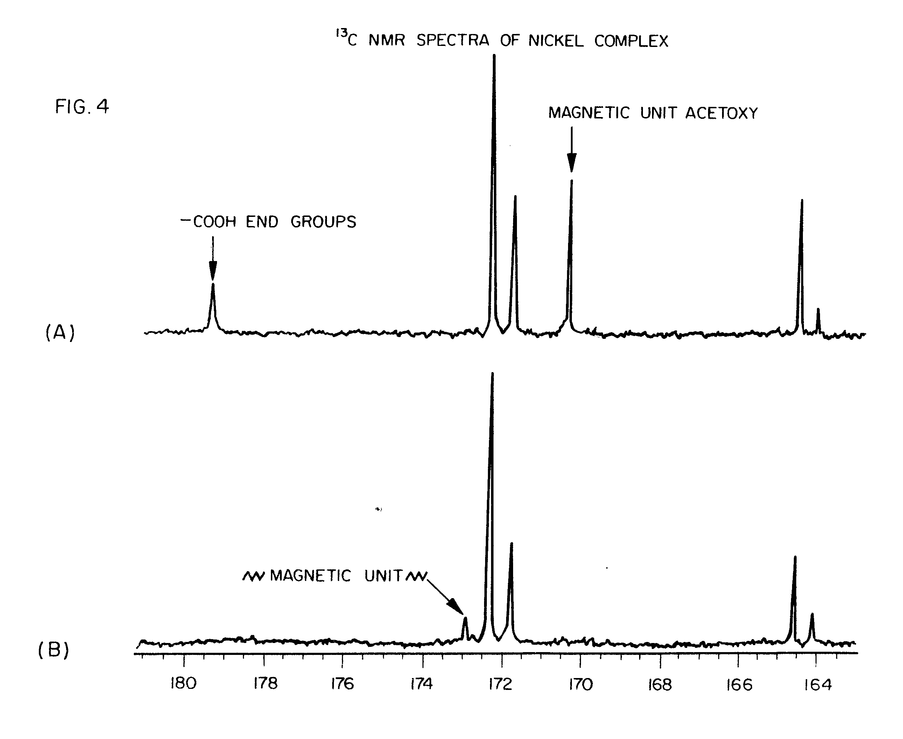

An additional example of a material in which a MAU was incorporated is depicted in Figure 4, which is an NMR spectrum of a material comprising the random liquid crystal polymer I having covalently bonded thereto an MAU similar to I4, except that the metal contained therein was nickel rather than copper. Curve (A) in Figure 4 depicts a mixture of the LCP and the MAU before reaction, indicating the presence of the end reactive groups of the individual components. Curve (B) shows the spectrum of the mixture after reaction, wherein the end groups disappear and the presence of the magnetic unit in the polymer chain is indicated.

In addition to incorporating an additive unit which is magnetically active, the invention also contemplates incorporating in a liquid crystal polymer an electrically active unit, i.e., a material which contains at least one electric dipole moment greater than about I.8 Debye units and thus is affected by an applied electric field. Examples of such electrically active units include 4,4′-bipyridinium halides having the formula

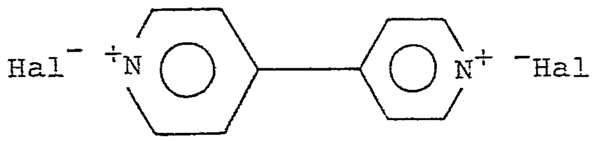

wherein Hal− is a halide ion, such as chloride or bromide.

In addition to the bipyridinium halides which can be used, we have discovered two novel materials which have strong electric dipole moments which render the compounds particularly suitable for use in the invention. These new compounds have the structures:

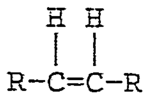 (I) and 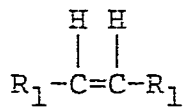 (II)

wherein R is

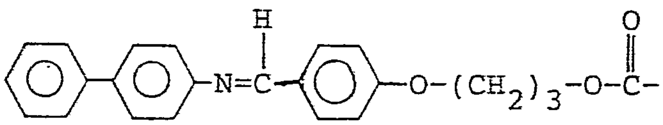

and $R_1$ is

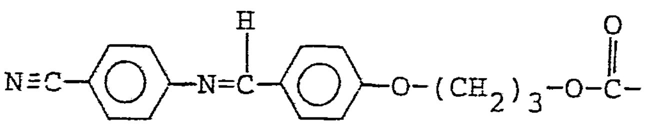

These compounds can be prepared in accordance with the following reactions:

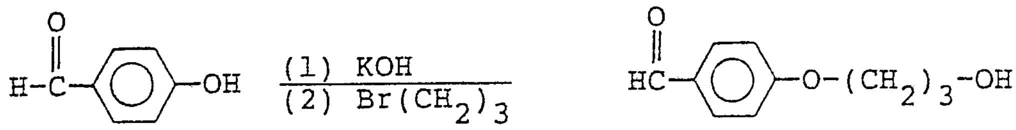


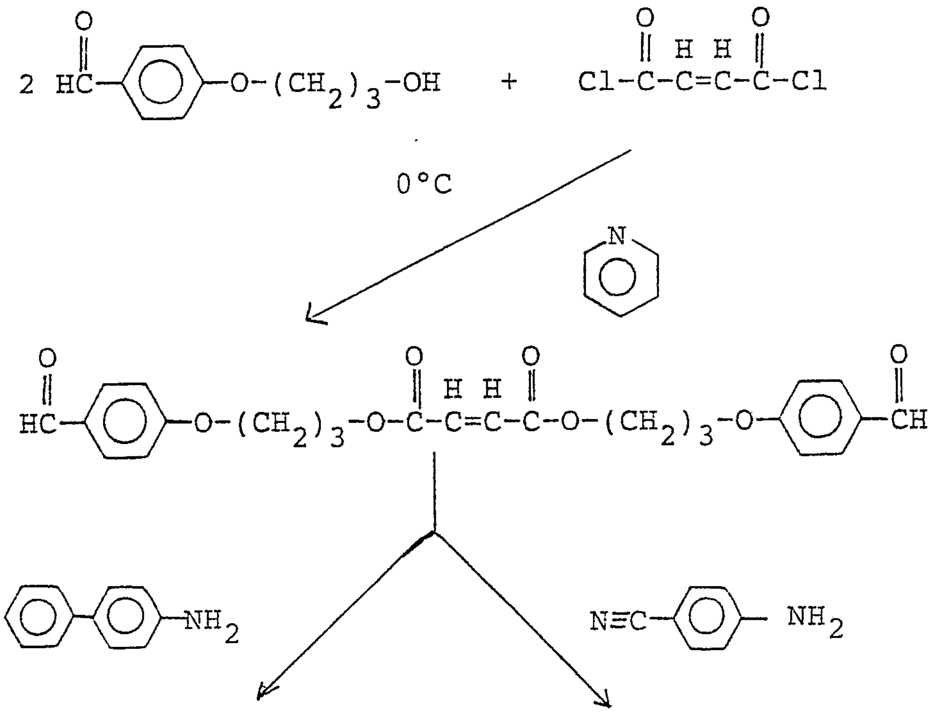


I II

The preparation of these electroactive materials is described below.

<u>Synthesis of Electroactive Material</u>

20 g. of p-hydroxybenzaldehyde and 10.8 g of potassium hydroxide were added to 240 ml of a benzene:dimethylformamide (1:1) solution and refluxed. Water was collected in a Dean-Stark trap. 25 g of 3-bromopropanol was added dropwise. Refluxing was con tinued for 6 hours. Solvents were removed under vacuum. Methylene chloride extraction gave 22 g of 4-(4′-formylphenoxy)propanol.

In a 100 ml round bottom flask was placed 10 g of 3-(4′-formylphenoxy)propanol, 15 ml of dichloroethane, and 10 ml of pyridine. After cooling to 0° C, 3.3 g of fumaroyl chloride in 10 ml dichloroethane were added dropwise. The contents were refluxed overnight and then extracted with chloroform and 1 N HCl. Removal of chloroform left a brown liquid which was purified by flask chromatography. (45:55, ethyl acetate: petroleum ether).

In a 5 ml round bottom flask was placed 363 mg of the dialdehyde in 2.5 ml of benzene containing 280 mg of 1-aminobiphenyl and a trace amount of p-toluenesulfonic acid. The mixture was heated to reflux for 20 minutes. The yellow solid was collected by filtration and the structure was verified by infra-red and NMR spectroscopy. The cyano mesogen was synthesized similarly using 4-aminobenzenenitrile.

It is also within the scope of the invention to produce blends of a liquid crystal polymer (LCP) with any other material which is not a liquid crystal polymer (non-LCP) but is compatible therewith. By "compatible", we mean that the LCP and the non-LCP are mutually soluble or are otherwise intimately associated, such that the largest discrete inclusion of the non-LCP within the LCP has a maximum dimension less than about 100 microns.

In such blends, we have found that because of the intimate association between the LCP and the non-LCP, the alignment of the LCP, e.g., by the application of an electric or magnetic field, will also cause the non-LCP to align in the same manner, even though the non-LCP alone has no measurable response to the applied electric or magnetic field. In this way, the benefits of an aligned structure can be obtained relative to the non-LCP, e.g., in strength or in anisotropic electrical conductivity when the non-LCP is electronically conductive.

An example of a non-LCP which is normally not influenced by a magnetic or electric field is polyphenylene sulfide (PPS) having the formula

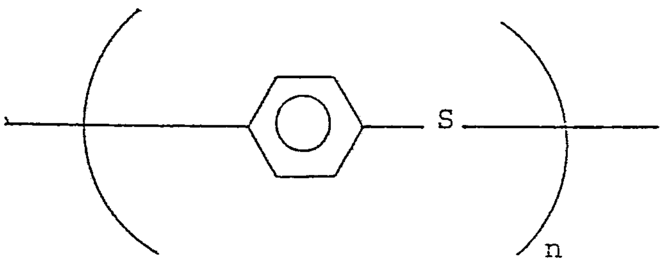

wherein n is an integer of about 500-1000. This polymer can be doped with strong oxidants, such as $SbF_5$ and $AsF_5$ to produce a conductive polymer. We have found that in compatible blends of LCP and PPS, the PPS becomes incorporated in the liquid crystalline phase and is consequently aligned by an applied magnetic field, even through PPS alone is not influenced by such a field. This result is particularly apparent when the blend contains less than 12.5% PPS.

The invention permits the electrical conductivity of a liquid crystalline aromatic polymer to be enhanced following its alignment in a magnetic field. The interaction of the external field with the liquid crystal permits the molecular organization which is induced by the applied field to be frozen by cooling the liquid crystal, thereby permitting control of the anisotropy of the physical properties of a solid polymer.

This result is illustrated by Figure 2. It has been found that liquid crystal polyesters, as previously described, will maintain the molecular orientation induced by an external field on solidification of the melt. Further, by measurement of the electrical conductivity on thin wafers sliced normal to the molecular axis direction, as shown in Figure 3, it has been discovered that the current flow within the insulating regime of conductivity is increased by a factor of 20, as a consequence of magnetically induced molecular orientation. Specifically, in a sample prepared with the previously described liquid crystal polymer I and 25% by weight of previously described composition I4 as the MAU, the ratio of the conductivity of the oriented sample parallel to its molecular axis to the conductivity of the isotropic solid sample was 25.4. The invention thereby provides a method of controlling the electrical conductivity of a liquid crystal polymer in a desired direction relative to the conductivity of the isotropic material.

The foregoing detailed description has been given for clearness of understanding only, and no unnecessary limitations should be understood therefrom as modifications will be obvious to those skilled in the art.

**Claims**

1. A method of increasing the rate at which the molecules of a liquid crystal polymer align in response to an applied magnetic or electric field, which method comprises associating with said liquid crystal polymer a proportion of a magnetically or electrically active unit sufficient to produce the desired rate increase.

2. The method of claim 1 wherein said active unit is capable of reacting with said liquid crystal.

3. The method of claim 1 wherein said compatible unit is paramagnetically or diamagnetically active and is a complex of a transition or rare earth metal, said complex being chemically and thermally stable.

4. The method of claim 1, wherein said active unit possesses a large electric dipole moment.

5. A liquid crystal polymer composition comprising a major proportion of a liquid crystal polymer and a minor proportion, sufficient to modify the response of said liquid crystal polymer to the application of a magnetic or electric field, of a magnetically or electrically active unit associated with said liquid crystal polymer.

6. A compositions in accordance with claim 5 wherein said liquid crystal polymer has the ordered structure $-(ABCBAC)_n-$ wherein

A is 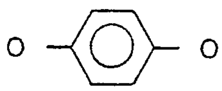

B is 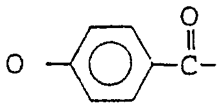

C is 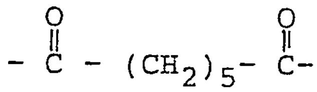

and n is 15-50.

7. A composition according to claim 5 wherein the liquid crystal polymer has a structure comprising repeating units A, B, and C in random order, wherein

A is 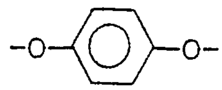

B is 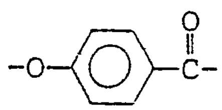

and C is 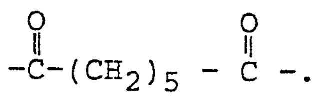.

8. A composition in accordance with claim 5 wherein said liquid polymer is a blend of polymers having ordered and random structures comprising repeating units A, B, and C wherein

A is 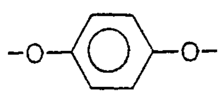

B is 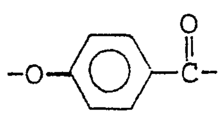

and C is 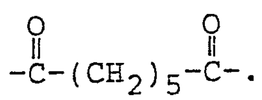.

9. A liquid crystal polymer composition in accordance with claim 5 wherein said active unit is a magnetically active compound having magnetic susceptibility anistropy greater than $1.0 \times 10^{-7}$ emu cgs $g^{-1}$.

10. A composition in accordance with claim 5 wherein said active unit is a paramagnetic or diamagnetic complex of a transition or rare earth metal, said complex being chemically and thermally stable and forming a copolymer with said liquid crystal polymer.

11. A composition in accordance with claim 5, wherein said liquid crystal polymer has the formula

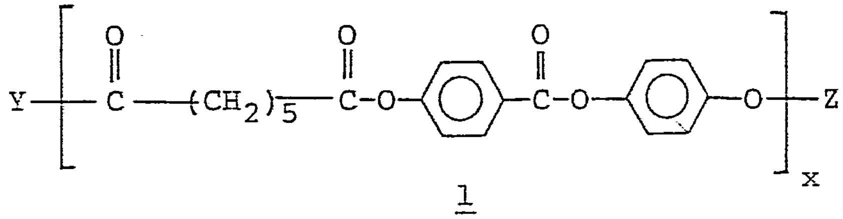

1

wherein x has a value from l5 to 50, and Y and Z are reactive groups capable of entering into a reaction.

l2. A composition in accordance with claim 5, wherein said liquid crystal polymer has the formula

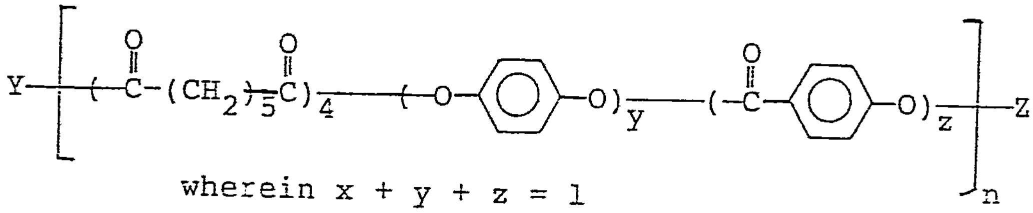

wherein $x + y + z = 1$

$z + y \geq 0.66$

n is 50-150

and y and z are reactive groups capable of entering into a reaction.

l3. A composition in accordance with claim 5 wherein said active unit has the formula

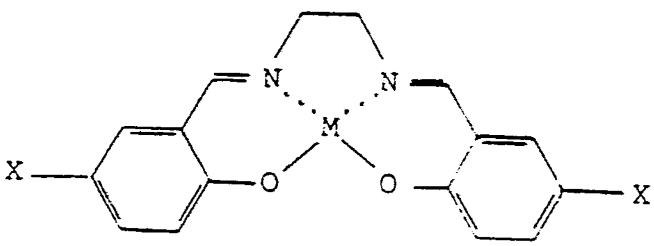

wherein M is a transition or rare earth metal, and X is a reactive functional group capable of reacting with the backbone of said liquid crystal polymer.

l4. A blend of a liquid crystal polymer and a non-liquid crystal polymer, said blend being alignable under the influence of an electric or magnetic field.

l5. A blend in accordance with claim l4 wherein said liquid crystal polymer and said non-liquid crystal polymer are mutually soluble.

l6. A blend in accordance with claim l4 wherein said non-liquid crystal polymer is initially associated with said liquid crystal polymer to the extent that said non-crystal polymer will become aligned under the influence of an electric or magnetic field.

l7. A composition in accordance with claim l4, wherein said non-liquid crystal polymer is polyphenylenesulfide having the formula

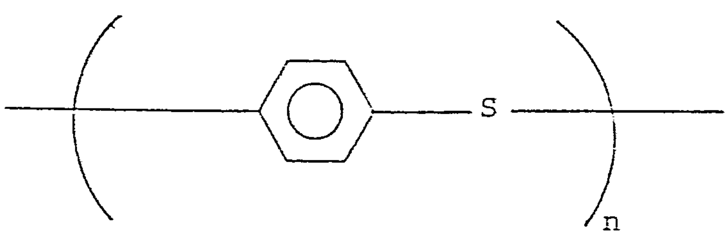

wherein n is 500-l000.

l8. An electroactive compound having either of the formulas:

$$R-\overset{H}{C}=\overset{H}{C}=R \qquad (I)$$

or

$$R_1-\overset{H}{C}=\overset{H}{C}-R_1 \qquad (II)$$

wherein R is

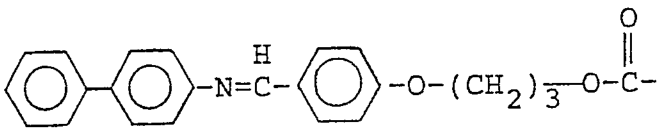

and $R_1$ is

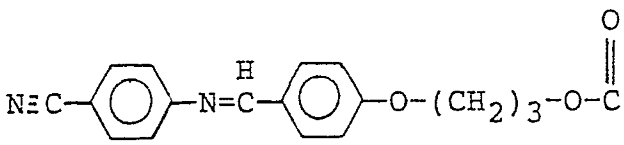

or a polymer thereof.

19. A method for producing a compound of claim 18 comprising the following reactions:

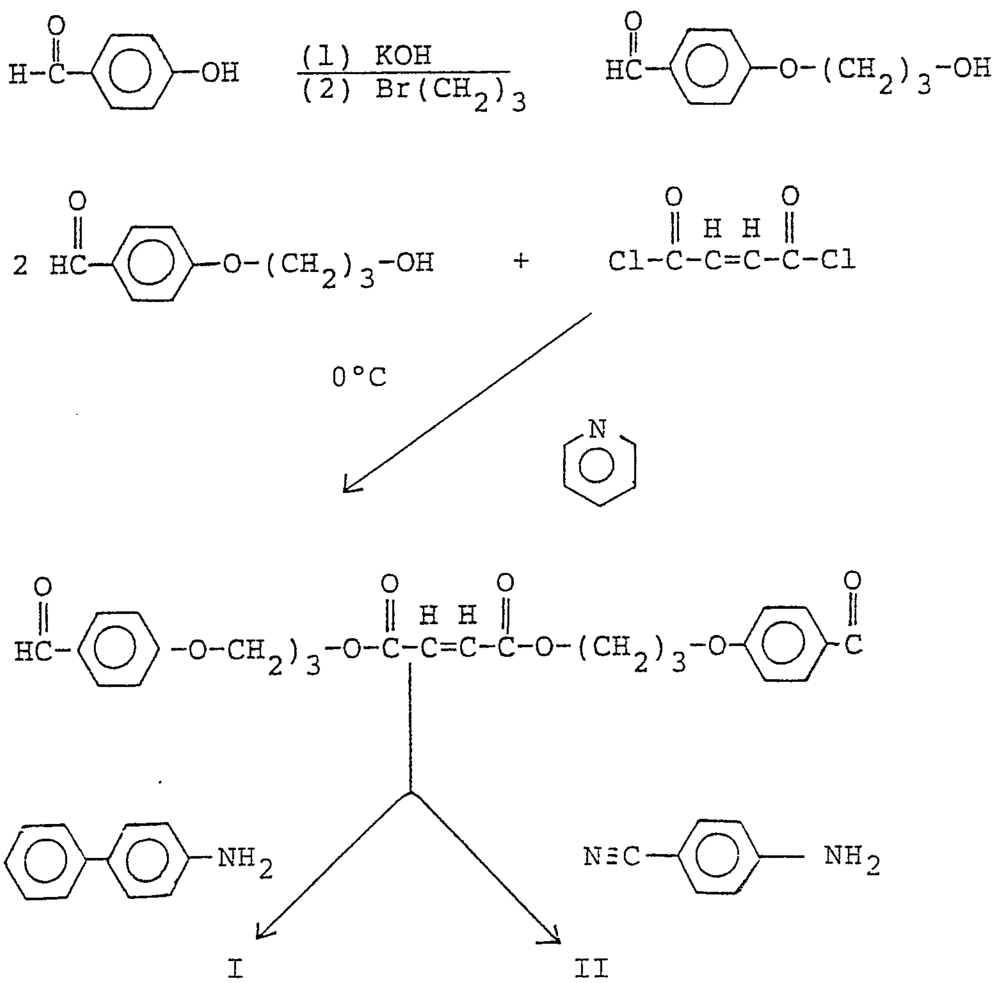

FIG. 1

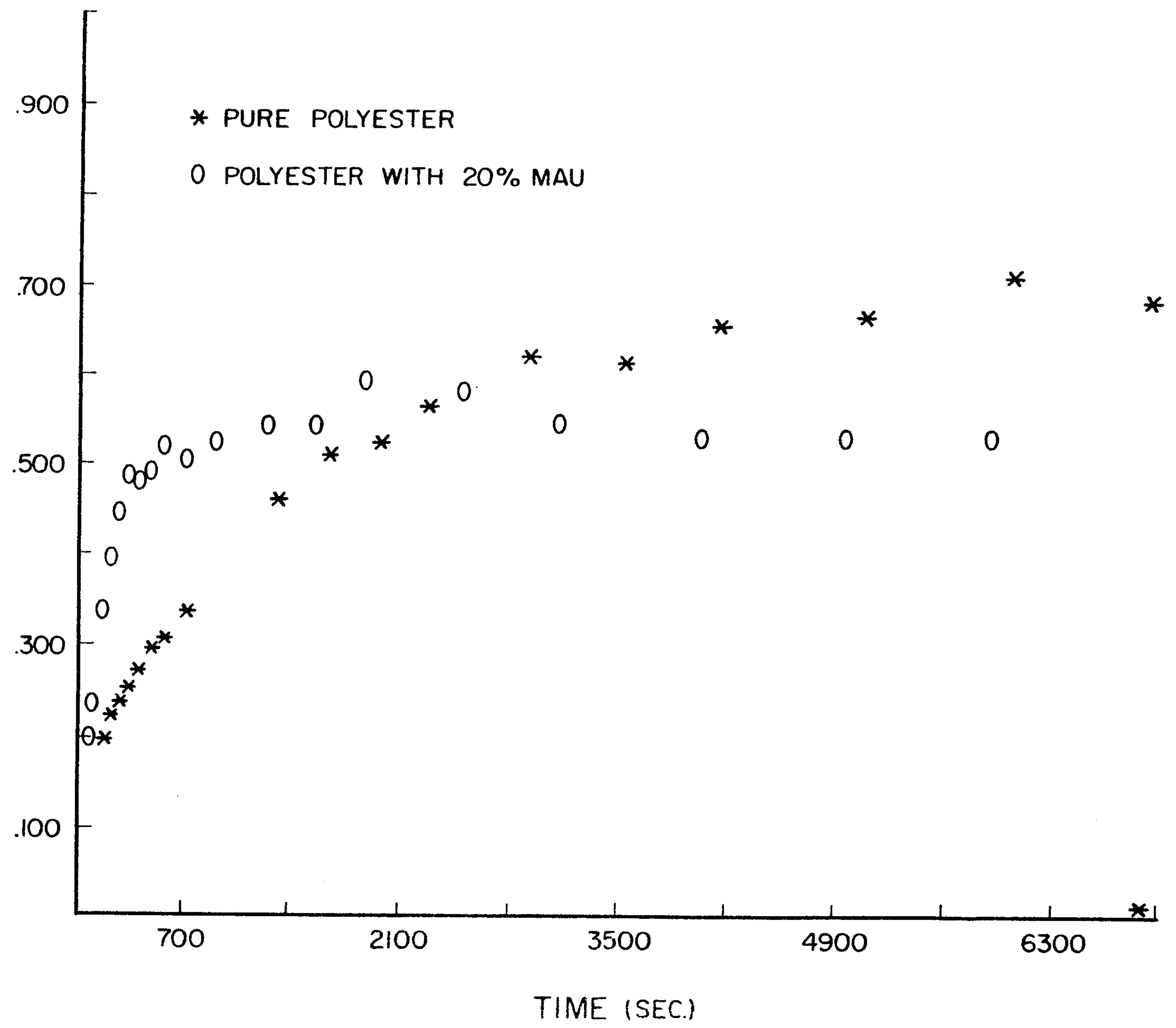
.900
.700
.500
.300
.100
* PURE POLYESTER
0 POLYESTER WITH 20% MAU
700
2100
3500
4900
6300
TIME (SEC.)

FIG. 2

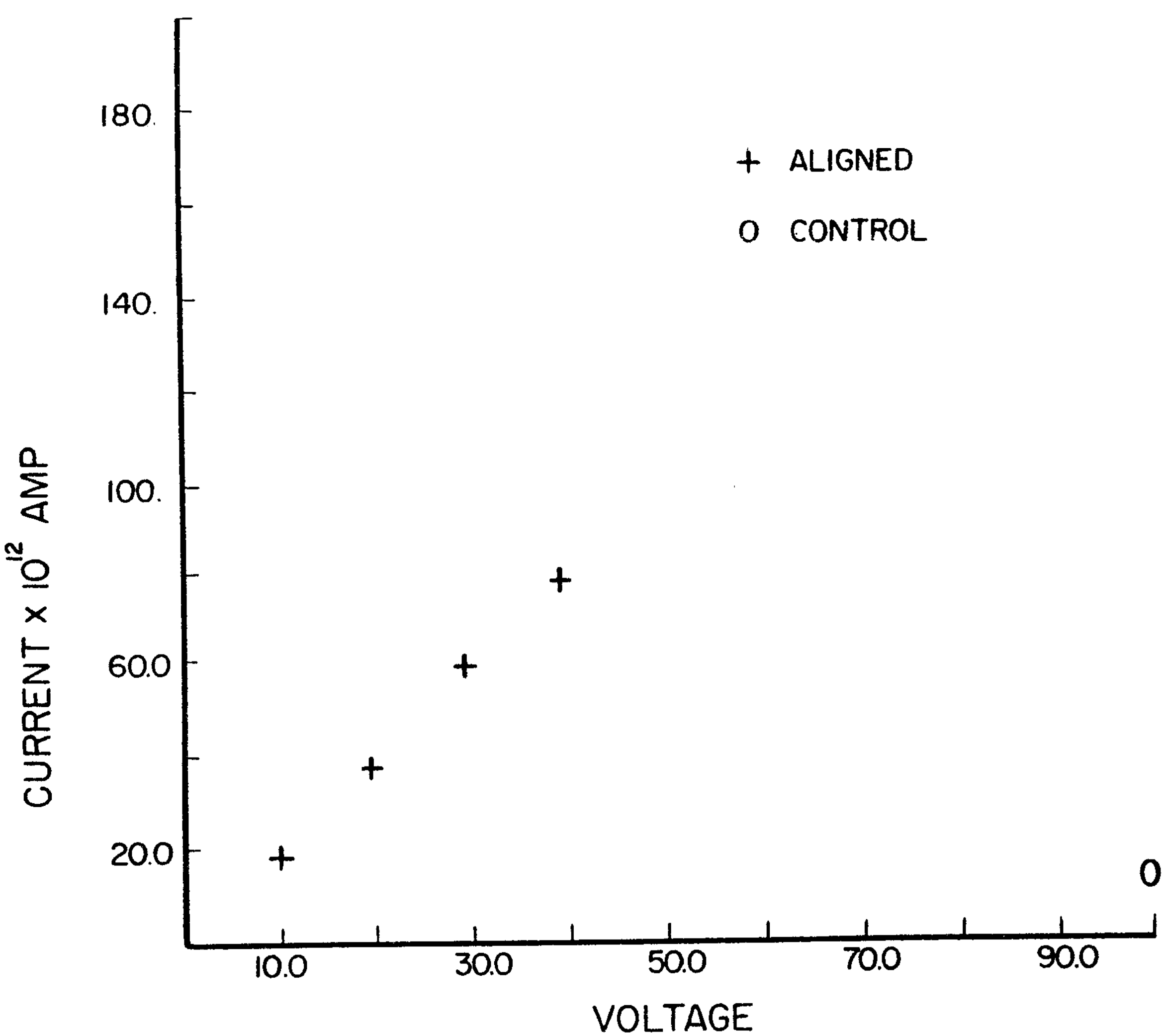
180.
140.
100.
60.0
20.0
CURRENT x 10^12 AMP
+ ALIGNED
O CONTROL
0
10.0
30.0
50.0
70.0
90.0
VOLTAGE

FIG. 3

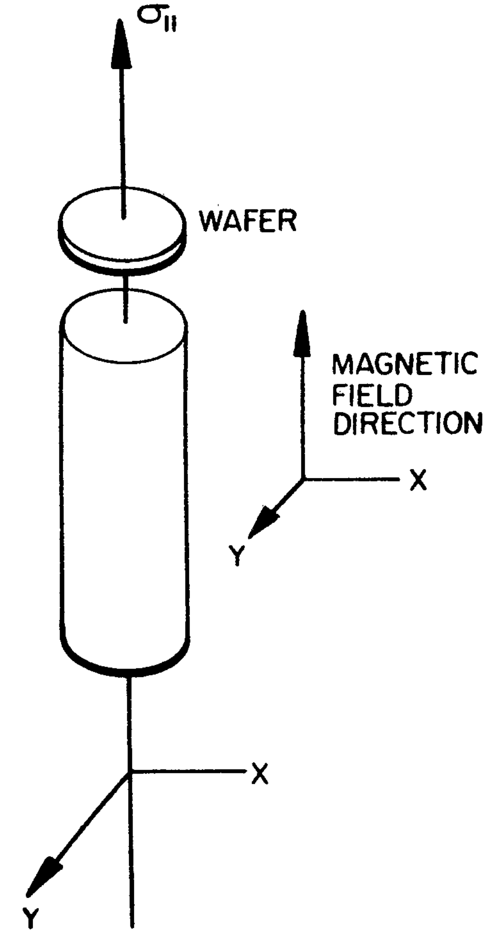
σ11
WAFER
MAGNETIC
FIELD
DIRECTION
X
Y
X
Y

0242278

FIG. 4